# EUROPEAN PATENT APPLICATION

(11) **EP 1 892 144 A1**
(43) Date of publication of application: **27.02.2008**
(21) Application number: 07114094.1
(22) Date of filing: 09.08.2007
(51) Int. Cl.: B60N 2/06, B60N 2/07, B60R 22/26

(54) **Seat slide apparatus for vehicle**

(30) Priority: 25.08.2006 JP 2006229226
(71) Applicant: AISIN SEIKI KABUSHIKI KAISHA, Kariya-shi, Aichi-ken 448-8650 (JP)
(72) Inventor: Kojima, Yasuhiro IPD AISIN SEIKI KABUSHIKI KAISHA, Kariya-shi Aichi 448-8650 (JP); Nihonmatsu, Hideo AISIN ENGINEERING CO., LTD, Kariya-shi Aichi 448-8605 (JP); Nagura, Mikihito, Okazaki-shi Aichi 4442121 (JP)
(74) Representative: TBK-Patent

(57) **Abstract**

A seat slide apparatus for a vehicle includes a lower rail (10), an upper rail (20), a lock mechanism (30) releaseably locking the upper rail (20) relative to the lower rail (10), and a belt anchor bracket (50) fixedly provided to the upper rail (20) and attached with a belt anchor (60). The belt anchor bracket (50) includes a rail fixing portion (51) having a plane surface being parallel to the upper surface of the upper rail (20) and attached to the upper surface of the upper rail (20), a load distribution portion (54) downwardly extending from the rail fixing portion (51) and being adjacent to an upper surface of the lower rail (10), and an anchor fixing portion (52) upwardly extending from the rail fixing portion (51) for anchoring the belt anchor (60).

## Description

### FIELD OF THE INVENTION

This invention relates to a seat slide apparatus for a vehicle of which an upper rail is fixed with a seatbelt anchor.

### BACKGROUND

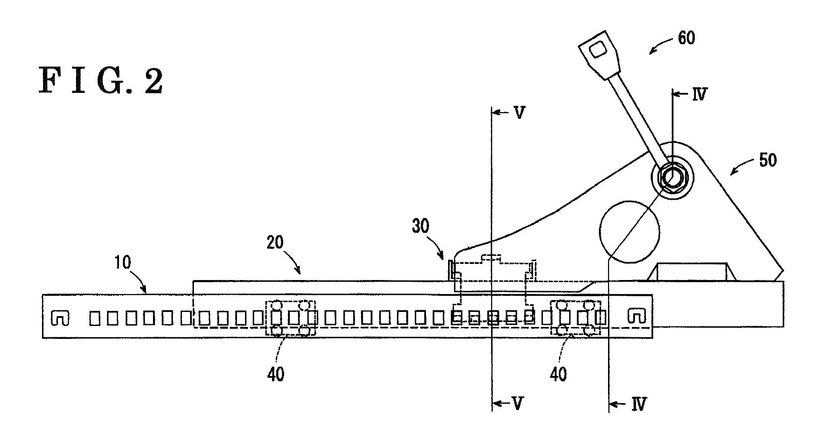

A known seat slide apparatus for a vehicle is disclosed in a Japanese Examined Utility Model Application Publication No. 08-10038 (hereinafter, referred to as a reference 1). As illustrated in Fig. 2 of the reference 1, the seat slide apparatus disclosed in the reference 1 includes a lower rail and an upper rail. The lower rail is fixed to a vehicle floor while the upper rail is secured to a seat of the vehicle and is movably supported relative to the lower rail. Further, the upper rail is fixedly provided with a belt anchor bracket (upper bracket) to which a belt anchor is fixed. An engaging plate is fixedly attached to a lower surface of the lower rail, and an end of the engaging plate is formed with an engaging rail. The belt anchor bracket (upper bracket) is fixed with a belt anchor plate. A lower end portion of the belt anchor plate is fixed to a sidewall portion of the upper rail by welding or the like. The lower end portion of the belt anchor plate is formed with a belt anchor piece which faces the engaging rail of the engaging plate.

According to the seat slide apparatus in the reference 1, when a lifting load is applied to the belt anchor, the lifting load is dispersedly transmitted over the upper rail 12 via the belt anchor bracket (upper bracket) and the belt anchor plate. Additionally, the lifting load is transmitted to the lower rail because the engaging piece is engaged with the engaging rail. Therefore, according to the seat slide apparatus in the reference 1, the lifting load received by the belt anchor is also received on the whole of the lower rail and the upper rail. Accordingly, detachment durability, for resisting a detachment of the upper rail from the lower rail, is increased.

Further, a known seat slide apparatus for a vehicle is disclosed in Japanese Patent No. 2004-106713A (hereinafter, referred to as a reference 2). As illustrated in Fig. 3 of the reference 2, the seat slide apparatus of the reference 2 includes a lower rail and an upper rail. The lower rail is fixed to a vehicle floor, and the upper rails is secured to a seat of the vehicle and movably supported relative to the lower rail. Further, the upper rail is fixedly provided with a belt anchor bracket to which a belt anchor (seatbelt anchor) is fixed. An approximately inverted J-shaped hook member is fixedly attached inside the upper rail to be adjacent to the belt anchor bracket. A screw spindle is unrotatably secured to the lower rail. The screw spindle is provided for changing a motor rotation to a longitudinal movement of the upper rail.

According to the seat slide apparatus disclosed in the reference 2, when a lifting load is applied to the belt anchor (seatbelt anchor), the lifting load is transmitted to the upper rail. Then, the lifting load is further transmitted to the lower rail because the hook member is engaged with the screw spindle. Therefore, according to the seat slide apparatus disclosed in the reference 2, the lifting load received by the belt anchor (seatbelt anchor) is received on whole of the lower and upper rails. Accordingly, detachment durability, for resisting a detachment of the upper rail from the lower rail, is increased.

However, the seat slide apparatus for the vehicle according to the reference 1 requires not only the belt anchor bracket (upper bracket) but also the engaging plate and the belt anchor plate. Further, the seat slide apparatus for the vehicle according to the reference 2 requires not only the belt anchor bracket but also the hook member. Therefore, according to each seat slide apparatus for the vehicle disclosed in the reference 1 and in the reference 2, an amount of components and the number of jointing positions are increased. Accordingly, a manufacturing cost may be increased and further, there is a possibility that a sliding resistance and a noise may be generated.

A need thus exists for a seat slide apparatus for a vehicle which achieves increasing detachment durability and reducing the manufacturing cost, and which reduces a generation of the sliding resistance and the noise.

### SUMMARY OF THE INVENTION

According to an aspect of the present invention, a seat slide apparatus for a vehicle includes a lower rail which is fixedly mounted on a vehicle floor, an upper rail which is coupled to a seat of the vehicle and movably supported by the lower rail, and a lock mechanism which releaseably locks the upper rail relative to the lower rail. The seat slide apparatus for the vehicle according to an aspect of the present invention further includes a belt anchor bracket which is fixedly provided at the upper rail and attached with a belt anchor. The belt anchor bracket includes a rail fixing portion having a plane surface being parallel to the upper surface of the upper rail and attached to the upper surface of the upper rail, a load distribution portion downwardly extending from the rail fixing portion and being adjacent to an upper surface of the lower rail, and an anchor fixing portion upwardly extending from the rail fixing portion for anchoring the belt anchor.

Due to the above described structure, the seat slide apparatus for the vehicle includes the load distribution portion. Accordingly, when a lifting load is applied to the belt anchor bracket, the lifting load is transmitted to the upper rail from the belt anchor bracket, and further transmitted to the lower rail because the load distribution portion of the belt anchor bracket makes a contact with and presses the lower rail. Therefore, according to the seat slide apparatus for the vehicle described above, the lifting load is received on both lower and upper rails. Further, the seat slide apparatus for the vehicle according to the present invention may not require further components than the belt anchor bracket in order to enhance detachment durability. Therefore, both an amount of components and the number of jointing positions can be reduced. Consequently, a manufacturing cost can be reduced, and a sliding resistance and a noise are prevented from being generated.

Further according to an aspect of the present invention, it is preferable that the belt anchor bracket includes a rail fixing portion having a plane surface being parallel to an upper surface of the upper rail and attached to the upper surface of the upper rail, the load distribution portion downwardly extending from the rail fixing portion and being adjacent to an upper surface of the lower rail, and an anchor fixing portion upwardly extending from the rail fixing portion for anchoring the belt anchor.

It is further preferable that the rail fixing portion includes an extending portion extending in a forward direction of the upper rail.

Due to the above described structure, the belt anchor bracket extends in a forward direction of the upper rail. Accordingly, when the lifting load is applied to the belt anchor bracket, the lifting load is transmitted to the upper rail via the rail fixing portion, and further transmitted to the lower rail because the load distribution portion makes contact with and presses the lower rail. Therefore, the releasing load is received on both the lower and upper rails. Further, the seat slide apparatus for the vehicle according to the present invention may not require further components than the belt anchor bracket in order to enhance detachment durability. Therefore, both an amount of components and the number of jointing positions can be reduced. Consequently, a manufacturing cost can be reduced, and a sliding resistance and a noise are prevented from being generated.

It is still further preferable that the belt anchor bracket makes a contact with the lower rail when a load being equal to or exceeding a predetermined value is applied to the belt anchor bracket.

Due to the above described structure, the load distribution portion makes a contact with the lower rail in a condition where a load, which is equal to or larger than a predetermined value, is applied to the belt anchor bracket. Therefore, the upper rail is normally not prevented from smoothly sliding relative to the lower rail.

It is still further preferable that the load distribution portion includes a sidewall portion downwardly extending from the rail fixing portion and a bottom portion extending from a lower portion of the sidewall portion in a lateral direction of the seat.

Due to the above described structure, the bottom portion, which extends from the lower edge portion of the sidewall portion, presses the lower rail. Accordingly, a contacting area of the load distribution portion with the lower rail may be larger and the rigidity of the belt anchor bracket may be increased.

It is further preferable that a reinforcement member is provided at the rail fixing portion of the belt anchor bracket, and the reinforcement member enhances rigidity of the belt anchor bracket.

It is still further preferable that a lock mechanism, for releaseably locking the upper rail relative to the lower rail, is further provided. The lock mechanism includes a lock portion provided at the lower rail, a lock member pivotably supported by the upper rail and being engageable with and disengageable from the lock portion, and the lock bracket serving as a reinforcement member for supporting the lock member.

Due to the above described structure, the reinforcement member enhances the rigidity of the belt anchor bracket. Accordingly, the detachment durability is enhanced.

Further, the lock bracket serves as the reinforcement member. Accordingly, the amount of the components and the number of jointing positions can be reduced.

### BRIEF DESCRIPTION OF THE DRAWINGS

The foregoing and additional features and characteristics of the present invention will become more apparent from the following detailed description considered with reference to the accompanying drawings, wherein:

Fig. 1 is a perspective view illustrating a seat slide apparatus according to an embodiment.;

Fig. 2 is a front view illustrating a pair of lower rail and upper rail according to the embodiment;

Fig. 3 is an exploded perspective view of the pair of lower rail and upper rail according to the embodiment;

Fig. 4 illustrates a cross sectional view of the seat slide apparatus taken along line IV-IV in Fig 2;

Fig. 5 illustrates a cross sectional view of the seat slide apparatus taken along line V-V in Fig. 2; and

Fig. 6 illustrates a belt anchor bracket according to the embodiment in a manner where a lifting load is applied to the belt anchor bracket.

### DETAILED DESCRIPTION

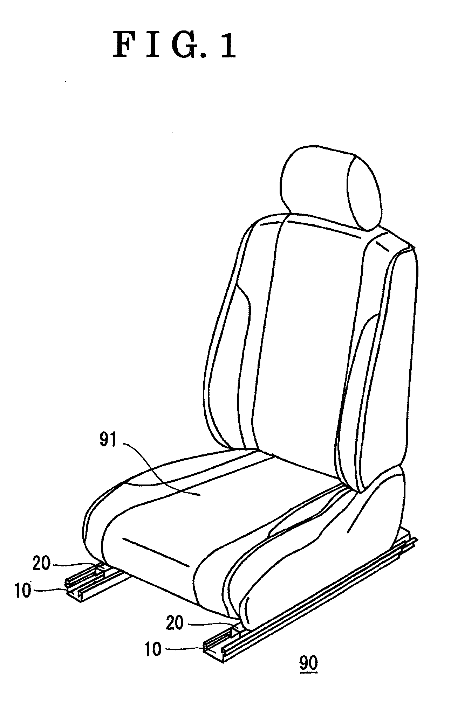

An embodiment of a seat slide apparatus for a vehicle according to the present invention is described hereinafter with reference to attached drawings. As illustrated in Figs. 1 and 2, the seat slide apparatus according to this embodiment includes a pair of lower rails 10, a pair of upper rails 20, and a lock mechanism 30. The lower rails 10 are fixedly mounted on a floor 90 of the vehicle in a longitudinal direction thereof. The upper rails 20 are secured to a seat 91 and movably supported by the lower rails 10. The lock mechanism 30 is provided for releaseably locking the upper rail 20 relative to the corresponding lower rail 10. A belt anchor bracket 50 for anchoring a belt anchor 60 is fixedly attached to the left or right upper rail 20 to be movably supported relative to the lower rail 10. Further the belt anchor bracket 50 is fixedly attached to a seat 91 mounted on the vehicle. Here, Fig. 1 illustrates a perspective view of the seat slide apparatus adapted to a vehicle, and Fig. 2 illustrates a front view of a pair of the lower rail 10 and the upper rail 20 fixedly attached with the belt anchor bracket 50. Directions, such as "longitudinal", "lateral", "vertical" or the like, which are mentioned herein, correspond to an orientation of the seat slide apparatus for the vehicle.

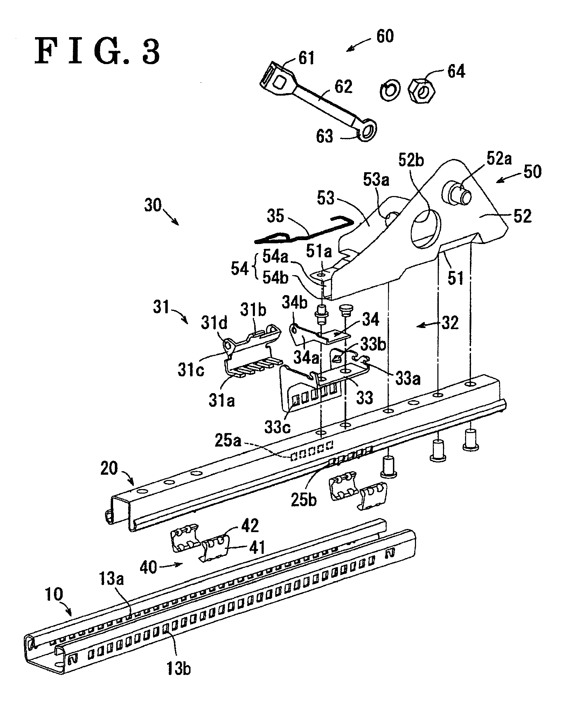

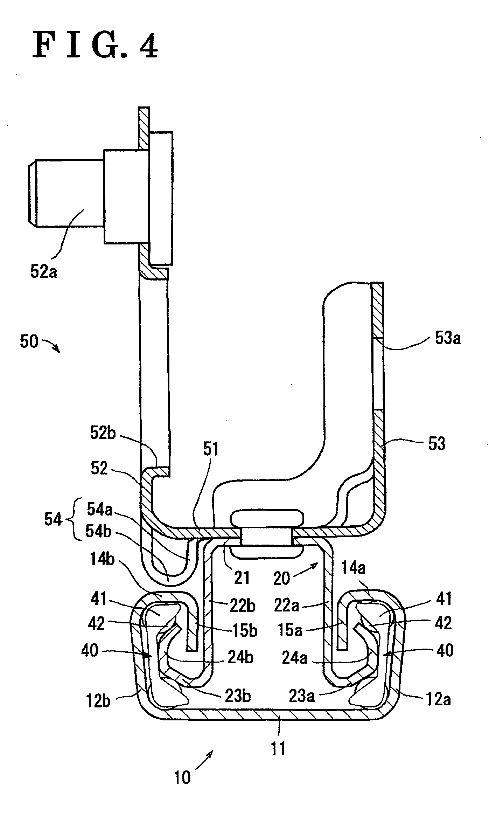

Next, components of the seat slide apparatus for the vehicle are described hereinbelow in detail in accordance with attached drawings. As illustrated in Figs. 3 to 5, each left and right lower rail 10 is provided with plural lock bores 13a and 13b, respectively, along a longitudinal direction of the lower rail 10. Each lower rail 10 includes a bottom wall 11, an inner first sidewall 12a, an outer first sidewall 12b, upper walls 14a, 14b and second sidewalls 15a and 15b. The bottom wall 11 is provided in parallel to the floor 90 of the vehicle. The inner and outer first sidewalls 12a and 12b upwardly extend from lateral ends of the bottom wall 11, respectively. The upper walls 14a and 14b inwardly extend from upper ends of the first sidewalls 12a and 12b respectively, and the second sidewalls 15a and 15b downwardly extend from inner ends of the upper walls 14a and 14b, respectively. The lock bores 13a are provided at the inner first sidewall 12a while the lock bores 13b are provided at the outer first sidewall 12b, of each lower rail 10. Here, the plural lock bores 13a provided at the inner first sidewall 12a serve as a lock portion. However, as described above, the lower rail 10 is further provided with the plural lock bores 13b so that an identical configuration is employed as the left lower rail 10 and the right lower rail 10.

Each left and right upper rail 20 includes an upper wall 21, an inner drooped portion 22a, an outer drooped portion 22b, connecting portions 23a and 23b, an inner upward portion 24a and an outer upward portion 24b. The upper wall 21 is arranged in parallel to the floor 90 of the vehicle. The inner and outer drooped portions 22a and 22b downwardly extend from lateral ends of the upper wall 21, respectively. The connecting portions 23a and 23b outwardly extend from lower end portions of the drooped portions 22a and 22b respectively, and the inner and outer upward portions 24a and 24b upwardly extend from outer end portions of the connecting portions 23a and 23b, respectively. The inner upward portion 24a is provided with through-bores 25a which are adapted to face the lock bores 13a of the inner first side wall 12a, while the outer upward portion 24b is provided with through-bores 25b which are adapted to face the lock bores 13b of the outer first sidewall 12b.

Sliding retaining members 40 are provided between the lower rail 10 and the upper rail 20 so as to slidably retain the upper rail 20 with the lower rail 10. One pair of the lower rail 10 and the upper rail 20 includes four sliding retaining members 40. Two sliding retaining members 40 are arranged in each front and rear portion of the inner first sidewall 12a of the lower rail 10, respectively, while the other two sliding retaining members 40 are arranged in each front and rear portion of the outer first sidewall 12b of the lower rail 10, respectively. Each sliding retaining member 40 includes a resin-made retainer 41 and balls 42 which are rotatably supported by the retainer 41.

The lock mechanism 30 includes the lock bores 13a as a lock portion, a locking lever 31 as a lock member, a lock bracket 32 and a spring 35. Lock nails 31a are provided at a lower portion of the locking lever 31 so as to be engageable with and releasable from the lock bores 13a provided at the lower rail 10. Further, an interlocking portion 31b is provided at an upper portion of the locking lever 31. The interlocking portion 31b is engaged with a pressing portion of a releasing lever respectively, both which are not illustrated. The non-illustrated releasing lever pivotally operates the locking levers 31. Both front and rear ends of the locking lever 31 are integrally provided with pivot plates 31c, respectively. Each pivot plate 31c is supported by the lock bracket 32 and is formed with a concave portion 31d, which includes a hemispherical concave surface.

The lock bracket 32 includes a first bracket 33 and a second bracket 34. The lock bracket 32 is fixedly attached to the upper wall 21 of the upper rail 20 above the lower rail 10, and extends along an outer surface of the inner first sidewall 12a of the lower rail 10. A supporting plate 33a is integrally provided at a rear end portion of the first bracket 33 and a supporting plate 34a is integrally provided at a front end portion of the second bracket 34, in order to support the locking lever 31. The supporting plates 33a and 34a are formed with protruding portions 33b and 34b, respectively, in a manner where the protruding portions 33b and 34b face the concave portions 31d of the pivot plates 31c, respectively. Accordingly, the protruding portions 33b and 34b are inserted into the concave portions 31d of the locking levers 31, respectively, and therefore, the locking lever 31 is pivotably supported by the lock bracket 32 around a pivotal axis 31e which extends in a longitudinal direction of the upper rail 20. Further, through bores 33c are provided at a lower portion of the first bracket 33. The through bores 33c are adapted to face the lock bores 13c formed at the lower rail 10. When the upper rail 20 is locked to corresponding lower rail 10, the lock nails 31a of the locking lever 31 are penetrated through the through-bores 25a of the upper rail 20 and through-bores 33c of the first bracket 33, and are engaged with the lock bores 13a of the lower rail 10. The spring 35 is supported by the locking lever 31 and the lock bracket 32. The spring 35 biases the locking lever 31 in a direction where the lock nails 31a of the locking lever 31 are engaged into the lock bores 13a of the lower rail 10.

The belt anchor bracket 50 includes a rail fixing portion 51, an anchor fixing portion 52, a seat fixing portion 53 and a load distribution portion 54. The rail fixing potion 51 includes a plane surface portion, which is arranged in parallel with the upper wall 21 of the upper rail 20 and is fixedly attached to the upper wall 21. The anchor fixing portion 52 upwardly extends from an outer side of the rail fixing portion 51 and is provided with an anchor fixing bolt 52a and a seat fixing bore 52b. The seat fixing portion 53 upwardly extends from an inner side of the rail fixing portion 51 and is provided with a seat fixing bore 53a. The seat 91 is partly secured by the seat fixing bore 53a.

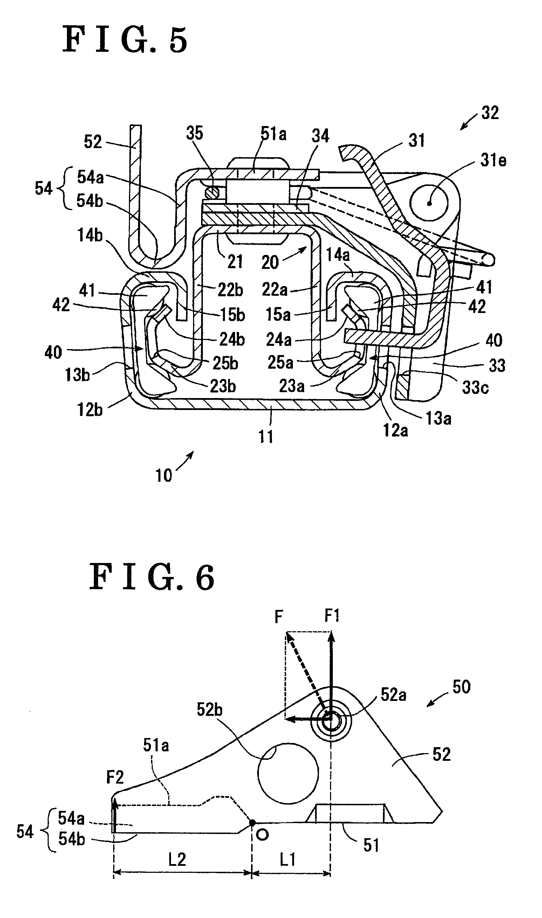

Further, an extending portion 51a extends at a front portion of the rail fixing portion 51 in the forward direction of the seat 1, and the load distribution portion 54 downwardly extends from an outer edge of the extending portion 51a. The load distribution portion 54 includes a sidewall portion 54a and a bottom portion 54b. The sidewall portion 54a downwardly extends from the outer edge of the extending portion 51a, and the bottom portion 54b extends from a lower end of the sidewall portion 54a outwardly in a lateral direction of the seat 91. The bottom portion 54b can be arranged in parallel with the upper wall 14b of the lower rail 10. Further, the bottom portion 54b is arranged adjacently to the upper wall 14b of the lower rail 10. In other wards, the bottom portion 54b is arranged to be adjacent to the upper rail 14b at a portion vertically lower than a position where the rail fixing portion 51 is arranged. Further, the anchor fixing portion 52 upwardly extends from an outer edge of the bottom wall 54b. More specifically, as illustrated in Fig. 6, the load distribution portion 54 is formed at a center O of the belt anchor bracket 50 and extends from the center O of the belt anchor bracket 50 in a front direction of the belt anchor bracket 50 with the longitudinal length L2. Here, the center O is assigned as a position, which is distant with the longitudinal length L1 in a forward direction of the vehicle from a position located at the rail fixing portion 51 in a vertically downward direction from a central position (serving as a belt anchor fixing position) of the anchor fixing bolt 52a. In other wards, the load distribution portion 54 is formed with the length L2 in the longitudinal direction of the seat slide apparatus for the vehicle. In addition, it is preferable that an equation "L1 < L2" (the length L2 is longer than the length L1) is applied to a relation of the lengths L1 and L2. However, the equation is not necessarily limited to the above. Alternatively, equations "L1 =L2" and "L1 > L2" are also applicable. As described above, the belt anchor bracket 50 additionally includes a portion extending in a front direction of the upper rail 20. Further, the lock bracket 32 is provided between the extending portion 51a of the belt anchor bracket 50 and the upper wall 21 of the upper rail 20. The lock bracket 32 serves as a reinforcement member, which enhances rigidity of the belt anchor bracket 50. In the mean time, the rigidity of the belt anchor bracket 50 is increased by the extending portion 51a, which extends from the front portion of the rail fixing portion 51. Accordingly, the extending portion 51a may also serve as a reinforcement member for enhancing the rigidity of the belt anchor bracket 50.

The belt anchor 60 includes a buckle 61, a buckle retaining member 62 and a fixing member 63. The anchor fixing bolt 52a of the anchor fixing portion 52 is inserted into the fixing member 63 and is connected thereto with a nut 64, and therefore, the belt anchor 60 is fixedly attached to the belt anchor bracket 50.

According to the above mentioned seat slide apparatus, as illustrated in Fig. 6, when an excessively large lifting load F is applied to the belt anchor 60, a component force F1 of the lifting load F is produced in a vertical direction relative to the lower rail 10 and the upper rail 20. Accordingly, a left rotation moment (F1 × L1) is generated relative to a center O of the belt anchor bracket 50. Therefore, the belt anchor bracket 50 starts rotating left around the center O and accordingly, the upper rail 20 starts flexing or bending to be lifted up from the lower rail 10 in a direction from a rear portion towards a front portion, of the upper rail 20. However, when the bottom portion 54b of the load distribution portion 54 makes a contact with and presses the upper portion 14b, the bottom portion 54b receives a counter force F2 from the lower rail 10 in a vertical direction relative to the lower rail 10. As described above, the counter force F2 is produced by the load distribution portion 54 pressing the upper portion 14b of the lower rail 10, and therefore, a right rotation moment (F2 × L2) is generated relative to the center O of the belt anchor bracket 50. Accordingly, the left rotation moment (F1 × L1) generated by the component force F1 is lowered by the right rotation moment (F2 × L2) generated by the counter force F2. Then, the upper rail 20 is restrained from being separated or lifted up from the lower rail 10.

According to the present embodiment of the seat slide apparatus for the vehicle, the belt anchor bracket 50 extends in a front direction of the upper rail 20. Accordingly, when the lifting load F is applied to the belt anchor 60, the lifting load F is dispersed to the front direction of the upper rail 20 and transmitted over the upper rail 20, via the rail fixing portion 51 of the belt anchor bracket 50. Furthermore, the lifting load F is transmitted to the lower rail 10 because the load distribution portion 54 of the belt anchor bracket 50 makes a contact with and presses the lower rail 10. Therefore, according to the seat slide apparatus of the present invention, the lifting load F is received not only by the belt anchor 60 but also by the lower rail 10 and the upper rail 20. Further, the seat slide apparatus for a vehicle according to the present invention may not require further components than the belt anchor bracket 50 in order to enhance detachment durability, which is a degree of resistance of the upper rail 20 to be retained at an original position relative to the lower rail 10. Therefore, both an amount of components and the number of jointing positions can be reduced. Consequently, according to the seat slide apparatus of the present embodiment, the detachment durability can be enhanced and a manufacturing cost can be reduced. Further, a sliding resistance and a noise are prevented from being generated.

Further according to the seat slide apparatus of the present invention, the lock bracket 32 serving as the reinforcement member is provided at the rail fixing portion 51 of the belt anchor bracket 50 in order to enhance the rigidity of the belt anchor bracket 50. Accordingly, the detachment durability may be further enhanced, and an amount of the components and the number of the jointing positions may be reduced.

Further according to the seat slide apparatus of the present invention, the bottom portion 54b, extending from the lower edge portion of the sidewall portion 54a outwardly in a lateral direction of the seat 91, presses the lower rail 10. Accordingly, a contacting area of the load distribution portion 54 with the lower rail 10 may be larger and the rigidity of the belt anchor bracket 50 may be increased.

Still further according to the seat slide apparatus of the present invention, the load distribution portion 54 makes a contact with the lower rail 10 in a condition where a load, which is larger than a predetermined value, is applied to the belt anchor bracket 50. Therefore, the upper rail 20 is normally not prevented from smoothly sliding relative to the lower rail 10.

The principles, preferred embodiment and mode of operation of the present invention have been described in the foregoing specification. However, the invention, which is intended to be protected, is not to be construed as limited to the embodiment disclosed. Further, the embodiments described herein are to be regarded as illustrative rather than restrictive. Others may make variations and changes, and equivalents employed, without departing from the spirit of the present invention. Accordingly, it is expressly intended that all such variations, changes and equivalents that fall within the spirit and scope of the present invention as defined in the claims, be embraced thereby.
A seat slide apparatus for a vehicle includes a lower rail (10), an upper rail (20), a lock mechanism (30) releaseably locking the upper rail (20) relative to the lower rail (10), and a belt anchor bracket (50) fixedly provided to the upper rail (20) and attached with a belt anchor (60). The belt anchor bracket (50) includes a rail fixing portion (51) having a plane surface being parallel to the upper surface of the upper rail (20) and attached to the upper surface of the upper rail (20), a load distribution portion (54) downwardly extending from the rail fixing portion (51) and being adjacent to an upper surface of the lower rail (10), and an anchor fixing portion (52) upwardly extending from the rail fixing portion (51) for anchoring the belt anchor (60).

## Claims

1. A seat slide apparatus for a vehicle, comprising:
a lower rail (10) adapted to be fixedly mounted on a vehicle floor (90);
an upper rail (20) adapted to be coupled to a seat (91) of the vehicle and movably supported by the lower rail (10); and
a belt anchor bracket (50) fixedly provided at the upper rail (20) and attached with a belt anchor (60), the belt anchor bracket (50) including a load distribution portion (54) to be in contact with the lower rail (10).

2. A seat slide apparatus for a vehicle according to claim 1, wherein
the load distribution portion (54) downwardly extends from the rail fixing portion (51) and is adjacent to an upper surface of the lower rail (10), and wherein the belt anchor bracket (50) further includes a rail fixing portion (51) having a plane surface being parallel to an upper surface of the upper rail (20) and attached to the upper surface of the upper rail (20), and an anchor fixing portion (52) upwardly extending from the rail fixing portion (51) for anchoring the belt anchor (60).

3. A seat slide apparatus for a vehicle according to claim 2, wherein
the belt anchor bracket (50) makes a contact with the lower rail (10) when a load being equal to or exceeding a predetermined value is applied to the belt anchor bracket (50).

4. A seat slide apparatus for a vehicle according to claim 2, wherein
the load distribution portion (54) includes a sidewall portion (54a) downwardly extending from the rail fixing portion (51) and a bottom portion (54b) extending from a lower portion of the sidewall portion (54a) in a lateral direction of the seat (91).

5. A seat slide apparatus for a vehicle according to claims 2 to 4, wherein
the load distribution portion (54) is positioned ahead of a belt anchor fixing position of the anchor fixing portion (52) in a longitudinal direction of the vehicle, and the belt anchor (60) is fixed to the anchor fixing portion (52) at the belt anchor fixing position.

6. A seat slide apparatus for a vehicle according to claim 5, wherein
a length of the load distribution portion (54) in the longitudinal direction of the vehicle is longer than a length between a position, where the load distribution portion (54) is formed, and a position located at the rail fixing portion (51) in a vertically downward direction from the belt anchor fixing position.

7. A seat slide apparatus for a vehicle according to claims 2 to 4, further comprising:
a reinforcement member (32/51a) provided at the rail fixing portion (51) of the belt anchor bracket (50), wherein the reinforcement member (32/51a) enhances rigidity of the belt anchor bracket (50).

8. A seat slide apparatus for a vehicle according to claim 7, wherein
the rail fixing portion (51) includes an extending portion (51a) extending in a forward direction of the upper rail (20).

9. A seat slide apparatus for a vehicle according to claim 7, further comprising:
a lock mechanism (30) for releaseably locking the upper rail (20) relative to the lower rail (10), a lock mechanism (30) including a lock portion (13a/13b) provided at the lower rail (10), a lock member (31) pivotably supported by the upper rail (20) and being engageable with and disengageable from the lock portion (13a,/13b), and the reinforcement member (32) supporting the lock member.

10. A seat slide apparatus for a vehicle according to claim 8, further comprising:
a lock mechanism (30) for releaseably locking the upper rail (20) relative to the lower rail (10), a lock mechanism (30) including a lock portion (13a/13b) provided at the lower rail (10), a lock member (31) pivotably supported by the upper rail (20) and being engageable with and disengageable from the lock portion (13a,/13b), and the reinforcement member (32) supporting the lock member.
